# EUROPEAN PATENT APPLICATION

(11) **EP 1 752 721 A2**
(43) Date of publication of application: **14.02.2007**
(21) Application number: 06118647.4
(22) Date of filing: 09.08.2006
(51) Int. Cl.: F25D 11/02, F25B 5/04, F25D 21/00

(54) **Refrigerator and control method thereof**

(30) Priority: 12.08.2005 KR 20050074012
(71) Applicant: Samsung Electronics Co., Ltd., Suwon-si, Gyeonggi-Do (KR)
(72) Inventor: Kang, Sung-cheol, Gwangsan-gu Gwangju city (KR); Seo, Kook-jeong, Seoul (KR); Yoon, Won-jae, Seoul (KR); Chang, Eui-young, Suwon-si Gyeonggi-do (KR)
(74) Representative: Grünecker, Kinkeldey, Stockmair & Schwanhäusser Anwaltssozietät

(57) **Abstract**

A refrigerator comprises a main body comprising three storage compartments, and a cooling unit (10) having a plurality of evaporators (31,32,33,34) respectively corresponding to the storage compartments, the cooling unit (10) comprising a refrigerant supply pipe (21) to supply a refrigerant to the evaporators, a plurality of refrigerant branch pipes (25,26) which are branched from the refrigerant supply pipe to connect the evaporators thereto, and to at least one of the refrigerant branch pipes the plurality of evaporators are connected in series, and a refrigerant connection pipe to connect an outlet of one of the plurality of refrigerant branch pipes and an inlet of another one of the plurality of refrigerant branch pipes.

Thus, the present invention provides a refrigerator which independently cools three or more storage compartments and improves cooling efficiency, and a control method thereof.

## Description

### CROSS-REFERENCE TO RELATED APPLICATIONS

This application claims the benefit of Korean Patent Application No.10-2005-0074012, filed on August 12, 2005, in the Korean Intellectual Property Office, the disclosure of which is incorporated herein by reference.

### BACKGROUND OF THE INVENTION

### Field of the Invention

The present invention relates to a refrigerator and a control method thereof, and more particularly, to a refrigerator which comprises three or more storage compartments and a cooling unit having a plurality of evaporators corresponding to the respective storage compartments, and a control method thereof.

### Description of the Related Art

Generally, a refrigerator comprises a main body which has a plurality of storage compartments to store food; a door to open and close openings formed in the plurality of storage compartments; and a cooling unit which is provided in the main body to supply cooling air cooling the respective storage compartments.

Recently, some cooling units comprise a plurality of evaporators to independently supply cooling air to the respective storage compartments.

For example, Korean Patent First Publication No. 10-2004-64787 discloses an example of a refrigerator which has a cooling loop comprising a plurality of evaporators corresponding to a plurality of storage compartments.

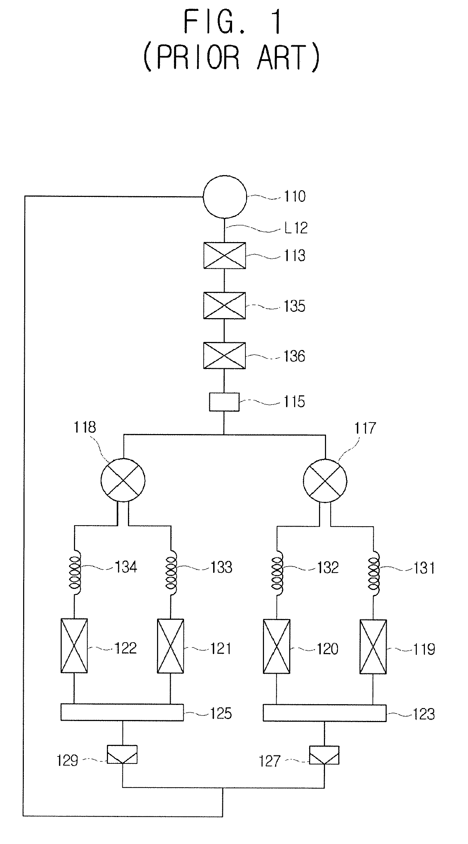

As shown in FIG. 1, such a cooling loop of a conventional refrigerator comprises a single compressor 110, a single condenser 113, four evaporators 119, 120, 121 and 122 which are respectively disposed in a separated area to evaporate a refrigerant supplied from the condenser 113; a joint refrigerant supply path L12 to allow the refrigerant passing through the four evaporators 119, 120, 121 and 122 to be mixed with each other and to flow to the compressor 110; and accumulators 123 and 125 which are connected between the four evaporators 119, 120, 121 and 122 and the joint refrigerant supply path L12.

The four evaporators 119, 120, 121 and 122 comprise a first evaporator 119, a second evaporator 120, a third evaporator 121 and a fourth evaporator 122 which have similar control temperature ranges. The first and second evaporators 119 and 120, and the third and fourth evaporators 121 and 122 are connected to each other in parallel on the joint refrigerant supply path L12. The first evaporator 119 and the second evaporator 120 are connected to each other in parallel. Also, the third evaporator 121 and the fourth evaporator 122 are connected to each other in parallel. A three-way valve 117 is provided between the condenser 113 and the first and second evaporators 119 and 120. Also, between the condenser 113 and the third and fourth evaporators 121 and 122 is provided another three-way valve 118. The cooling loop of the conventional refrigerator further comprises hot pipes 135 and 136 which are provided in an outlet of the condenser 113 to prevent dewdrops from being formed when the door is open; a dryer 115 which is provided at an outlet of the hot pipes 135 and 136; expansion apparatuses 131, 132, 133 and 134 which are provided in inlets of the respective evaporators 119, 120, 121 and 122; and check valves 127 and 129 which are provided in an outlet of the accumulators 123 and 125.

Thus, the conventional refrigerator may independently control temperatures of the respective storage spaces corresponding to the respective evaporators 119, 120, 121 and 122 as the refrigerant which has passed through the condenser 113 is supplied to at least one of the first evaporator 119, the second evaporator 120, the third evaporator 121 and the fourth evaporator 122.

However, because the plurality of evaporators are connected with each other in parallel in the cooling loop of the conventional refrigerator, when the refrigerant from the compressor is simultaneously supplied to the plurality of evaporators, the evaporator with small internal resistance receives more refrigerant than that with relatively high internal resistance, thereby lowering the cooling efficiency.

In the cooling loop of the conventional refrigerator, if the refrigerant supplied from the compressor by the valve is supplied to some of the plurality of the evaporators, some already distributed refrigerant may be stuck in the evaporator which does not receive refrigerant from the compressor, thereby causing a shortage in the total amount of the circulating refrigerant and lowering of the cooling efficiency.

The conventional refrigerator removes frost which is attached to the respective evaporators. At this time, the evaporators receive heat through a defrosting heater in a state in which the compressor stops operating, and at the same time the valve mounted in the refrigerant pipe is open to make the refrigerant pipe connected to the compressor maintain pressure balance.

However, if the valve mounted in the refrigerant pipe is open in the refrigerator having the plurality of evaporators, the refrigerant is continuously introduced to the plurality of evaporators while defrosting the refrigerator, thereby taking a relatively long time to remove the frost, and lowering the cooling efficiency as the heat generated while defrosting the refrigerator is transferred to the storage compartments and the refrigerant.

### SUMMARY OF THE INVENTION

Accordingly, it is an aspect of the present invention to provide a refrigerator which independently cools three or more storage compartments and improves cooling efficiency, and a control method thereof.

Additional aspects and/or advantages of the present invention will be set forth in part in the description which follows and, in part, will be apparent from the description, or may be learned by practice of the present invention.

The foregoing and/or other aspects of the present invention are achieved by providing a refrigerator comprising a main body comprising three storage compartments, and a cooling unit having a plurality of evaporators respectively corresponding to the storage compartments, the cooling unit comprising a refrigerant supply pipe to supply a refrigerant to the evaporators, a plurality of refrigerant branch pipes which are branched from the refrigerant supply pipe to connect the evaporators thereto, and to at least one of the refrigerant branch pipes the plurality of evaporators are connected in series, and a refrigerant connection pipe to connect an outlet of one of the plurality of refrigerant branch pipes and an inlet of another one of the plurality of refrigerant branch pipes.

According to another aspect of the present invention, the cooling unit comprises a multi-way valve which is provided between the refrigerant supply pipe and the plurality of refrigerant branch pipes to open and close the plurality of refrigerant branch pipes.

According to another aspect of the present invention, the plurality of refrigerant branch pipes comprise a first refrigerant branch pipe and a second refrigerant branch pipe, and the multi-way valve opens and closes the first refrigerant branch pipe and the second refrigerant branch pipe.

According to another aspect of the present invention, the plurality of evaporators comprises a first evaporator which is mounted to the first refrigerant branch pipe, a second evaporator which is mounted to the second refrigerant branch pipe, and a third evaporator which is connected in series with at least one of the first evaporator and the second evaporator.

According to another aspect of the present invention, the refrigerator further comprises a fourth storage compartment and a fourth evaporator, wherein the third evaporator is connected in series with the first evaporator, and the fourth evaporator is connected in series with the second evaporator.

According to another aspect of the present invention, the cooling unit further comprises a compressor which is connected to an outlet of the second refrigerant branch pipe to compress the refrigerant, a condenser which is provided between the compressor and the multi-way valve, a first capillary tube which is provided between the first evaporator and the multi-way valve, and a second capillary tube which is provided between the second evaporator and the multi-way valve.

According to another aspect of the present invention, the cooling unit further comprises an auxiliary capillary tube which is provided in the refrigerant connection pipe.

According to another aspect of the present invention, the cooling unit further comprises a plurality of defrosting heaters which respectively defrost the evaporators, and
a controller which controls the multi-way valve to close the plurality of refrigerant branch pipes before the defrosting heaters defrost the evaporators.

According to another aspect of the present invention, the cooling unit further comprises a compressor connected to an outlet of the second refrigerant branch pipe to compress the refrigerant and the controller controls the multi-way valve to open the plurality of refrigerant branch pipes for a predetermined pause time before the compressor compresses the refrigerant in a state in which the defrosting heaters stop operating.

The foregoing and/or other aspects of the present invention are achieved by providing a refrigerator comprising a main body comprising three storage compartments, and a cooling unit having a plurality of evaporators respectively corresponding to the storage compartments, the cooling unit comprising a refrigerant supply pipe to supply a refrigerant to the evaporators, a plurality of refrigerant branch pipes which are branched from the refrigerant supply pipe to connect the evaporators thereto, a multi-way valve which is provided to open and close the plurality of refrigerant branch pipes in a branch area where the plurality of refrigerant branch pipes are branched from the refrigerant supply pipe, a plurality of defrosting heaters which are provided to respectively defrost the evaporators, and a controller which controls the multi-way valve to close the plurality of refrigerant branch pipes before the defrosting heaters operate.

According to another aspect of the present invention, the refrigerator further comprises a compressor to compress the refrigerant, wherein the controller controls the multi-way valve to open the plurality of refrigerant branch pipes for a predetermined pause time before the compressor compresses the refrigerant in a state in which the defrosting heaters stop operating.

According to another aspect of the present invention, the plurality of evaporators are serially mounted to at least one of the plurality of refrigerant branch pipes.

According to another aspect of the present invention, the refrigerator further comprises a refrigerant connection pipe which connects an outlet of one of the plurality of refrigerant branch pipes and an inlet of another one of the plurality of refrigerant branch pipes.

The foregoing and/or other aspects of the present invention are achieved by providing a method of controlling a refrigerator having a main body which is formed with three storage compartments, three evaporators respectively corresponding to the storage compartments and a defrosting heater to defrost the evaporators, comprising branching a plurality of refrigerant branch pipes from a refrigerant supply pipe which supplies a refrigerant to the evaporators, connecting one of the evaporators to a respective one of the branched refrigerant pipes, closing the plurality of branched refrigerant pipes, and defrosting the storage compartments with the defrosting heater after the closing of the branched refrigerant pipes.

According to another aspect of the present invention, the method further comprises stopping the defrosting of the storage compartments, opening the plurality of branched refrigerant pipes for a predetermined pause time after the stopping of the defrosting, and operating a compressor of the refrigerator after the opening of the branched refrigerant pipes.

The foregoing and/or other aspects of the present invention are achieved by providing a refrigerator comprising first and second storage compartments, first and second evaporators respectively corresponding to the first and second storage compartments, and a first pipe to supply a refrigerant from the first evaporator to the second evaporator.

According to another aspect of the present invention, the first and second evaporators are in series.

According to another aspect of the present invention, the refrigerator further comprises a second pipe to supply the refrigerant to inlets of the evaporators, wherein the first pipe supplies the refrigerant from an outlet of the first evaporator to the inlet of the second evaporator.

The foregoing and/or other aspects of the present invention are achieved by providing a method of cooling first and second storage compartments of a refrigerator comprising: providing first and second evaporators respectively corresponding to the first and second storage compartments; and supplying a refrigerant from the first evaporator to the second evaporator.

### BRIEF DESCRIPTION OF THE DRAWINGS

The above and/or other aspects and advantages of the present invention will become apparent and more readily appreciated from the following description of the preferred embodiment, taken in conjunction with the accompanying drawings of which:
FIG. 1 shows a configuration of a cooling loop of a conventional refrigerator;
FIG. 2 shows a configuration of a cooling unit of a refrigerator according to an embodiment of the present invention;
FIG. 3 is a control block diagram of the refrigerator of FIG. 2;
FIG. 4 illustrates a control state of the cooling unit of the refrigerator of FIG. 2; and
FIG. 5 is a control flowchart of the refrigerator of FIG. 2.

### DETAILED DESCRIPTION OF THE PREFERRED EMBODIMENT

Reference will now be made in detail to the present preferred embodiment of the present invention, an example of which is illustrated in the accompanying drawings, wherein like reference numerals refer to like elements throughout.

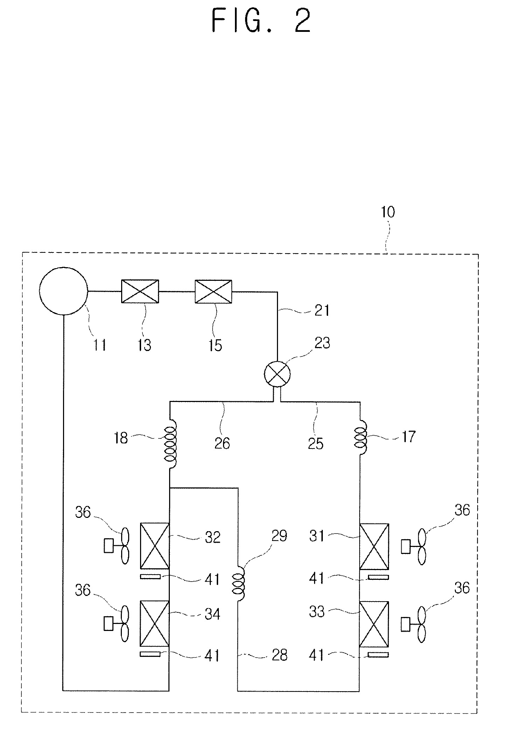

A refrigerator according to the embodiment of the present invention comprises a main body (not shown) which is formed with three or more storage compartments (not shown); and a plurality of doors (not shown) which open and close the respective storage compartments. As shown in FIG. 2, a cooling unit 10 comprises a plurality of evaporators 31, 32, 33 and 34 respectively corresponding to the respective storage compartments.

As an example, the present invention includes four storage compartments to respectively correspond to the four evaporators 31, 32, 33 and 34. Alternatively, there may be provided three, five or more storage compartments and a corresponding number of the evaporators.

The cooling unit 10 comprises the plurality of evaporators 31, 32, 33 and 34; a refrigerant supply pipe 21 to supply a refrigerant to the evaporators 31, 32, 33 and 34; a plurality of refrigerant branch pipes 25 and 26 which are branched from the refrigerant supply pipe 21 to mount the evaporators 31, 32, 33 and 34 thereto; and a refrigerant connection pipe 28 which connects an outlet of one of the plurality of refrigerant branch pipes 25 and 26, and an inlet side of the other one of the plurality of refrigerant branch pipes 25 and 26 with respect to the respective evaporator. The cooling unit 10 also comprises a compressor 11 to compress the refrigerant; a condenser 13 to condense the refrigerant compressed by the compressor 11 and to supply the compressed refrigerant to the supply refrigerant pipe 21; a multi-way valve 23 which is provided between the refrigerant supply pipe 21 and the plurality of refrigerant branch pipes 25 and 26 to open and close the plurality of refrigerant branch pipes 25 and 26; and a plurality of capillary tubes 17 and 18 which are respectively mounted in the plurality of refrigerant branch pipes 25 and 26 provided in an outlet of the multi-way valve 23. The cooling unit 10 further comprises a hot pipe 15 which is connected between the condenser 13 and the refrigerant supply pipe 21 to prevent dewdrops from being formed in a front part of the main body when the door is open. The cooling unit 10 further comprises a plurality of cooling fans 36 to supply cooling air generated from the respective evaporators 31, 32, 33 and 34 to the respective storage compartments.

The refrigerant supply pipe 21 is connected with the multi-way valve 23 to transmit the refrigerant condensed in the condenser 13 and the hot pipe 15 to the multi-way valve 23.

The multi-way valve 23 may be open to supply the refrigerant from the refrigerant supply pipe 21 to at least one of the plurality of refrigerant branch pipes 25 and 26, or may be closed to not supply the refrigerant to the plurality of refrigerant branch pipes 25 and 26. As an example, the multi-way valve 23 is provided as a three-way valve which connects the refrigerant supply pipe 21, and the first refrigerant branch pipe 25 and the second refrigerant branch pipe 26 (to be described later). Alternatively, the multi-way valve 23 may have a different number of settings, for example, as a four-way valve if there are provided three refrigerant branch pipes.

The refrigerant branch pipes 25 and 26 are connected with the multi-way valve 23 to receive the refrigerant from the refrigerant supply pipe 21. As an example, the refrigerant branch pipes 25 and 26 are provided as the first refrigerant branch pipe 25 and the second refrigerant branch pipe 26. However, the refrigerant branch pipes 25 and 26 are not limited to a pair. Alternatively, there may be provided three or more refrigerant branch pipes.

The first refrigerant branch pipe 25 is mounted with the first capillary tube 17 to change the refrigerant from the multi-way valve 23 into a low temperature and low pressure; and the first evaporator 31 and the third evaporator 33 (to be described later) to allow the refrigerant passing through the first capillary tube 17 to absorb the surrounding heat and to be evaporated.

The second refrigerant branch pipe 26 is mounted with the second capillary tube 18 to change the refrigerant from the multi-way valve 23 into a low temperature and low pressure; and the second evaporator 32 and the fourth evaporator 34 (to be described later) to allow the refrigerant passing through the second capillary tube 18 to absorb the surrounding heat and to be evaporated.

The evaporators 31, 32, 33 and 34 may comprise the first evaporator 31 mounted in the first refrigerant branch pipe 25, the second evaporator 32 mounted in the second refrigerant branch pipe 26 and at least the third evaporator 33 which is connected in series with at least one of the first evaporator 31 and the second evaporator 32. As shown in FIG. 2, there are four evaporators 31, 32, 33 and 34 including the fourth evaporator 34. That is, the first evaporator 31 is mounted in the first refrigerant branch pipe 25, the second evaporator 32 is mounted in the second refrigerant branch pipe 26, the third evaporator 33 is connected in series with the first evaporator 31 of the first refrigerant branch pipe 25, and the fourth evaporator 34 is connected in series with the second evaporator 32 of the second refrigerant branch pipe 26. Alternatively, three evaporators 31, 32 and 33 may be provided, in which case the third evaporator 33 is connected in series with one of the first evaporator 31 and the second evaporator 32.

As an example of the embodiment of the present invention, the storage compartments cooled by the first and the third evaporators 31 and 33 may function as a refrigerating compartment. However, at least one of the storage compartments cooled by the first and third evaporators 31 and 33 may function as a freezing compartment. For example, a preset temperature of the storage compartments cooled by the first evaporator 31 may range between 0°and 15 ° C and the preset temperature of the storage compartments cooled by the third evaporator 33 may range between -10° and 15°C.

The storage compartments cooled by the second and fourth evaporators 32 and 34 may also function as the freezing compartment. Alternatively, at least one of the storage compartments cooled by the second and fourth evaporators 32 and 34 may function as the refrigerating compartment. That is, the preset temperature of the storage compartments cooled by the second evaporator 32 may range between -10°C and -30°C. The setting temperature of the storage compartments (not shown) cooled by the fourth evaporator 34 may range between -30°C and 15 °C.

The refrigerant connection pipe 28 connects an outlet of the first refrigerant branch pipe 25 and an inlet of the second refrigerant branch pipe 26 to supply the refrigerant passing through the first refrigerant branch pipe 25 to the second refrigerant branch pipe 26. The refrigerant connection pipe 28 may be connected to the second refrigerant branch pipe 26 between the second capillary tube 18 and the second evaporator 32. The refrigerant connection pipe 28 is mounted with an auxiliary capillary tube 29 to change the refrigerant passing through the first refrigerant branch pipe 25 back to the low temperature and low pressure.

With this configuration, the operation of the cooling unit 10 of the refrigerator according to the embodiment of the present invention is as follows.

First, the refrigerant compressed in the compressor 11 is transmitted to the refrigerant supply pipe 21 through the condenser 13 and the hot pipe 15. The refrigerant transmitted to the refrigerant supply pipe 21 may be supplied to at least one of the first refrigerant branch pipe 25 and the second refrigerant branch pipe 26 through the multi-way valve 23.

If the multi-way valve 23 opens the first refrigerant branch pipe 25 alone, the refrigerant passing through the multi-way valve 23 sequentially passes through the first capillary tube 17, the first and third evaporators 31 and 33, the refrigerant connection pipe 28, the auxiliary capillary tube 29 and the second and fourth evaporators 32 and 34, to be introduced to the compressor 11. At this time, the refrigerant passing through the multi-way valve 23 passes through the first and third evaporators 31 and 33, and the second and fourth evaporators 32 and 34 in series. Thus, the refrigerant is not concentrated in the first refrigerant branch pipe 25 and the second refrigerant branch pipe 26, thereby preventing a shortage of the amount of the circulating refrigerant.

Meanwhile, if the multi-way valve 23 opens the second refrigerant branch pipe 26 only, the refrigerant passing through the multi-way valve 23 sequentially passes through the second capillary tube 18 and the second and fourth evaporators 32 and 34 to be introduced to the compressor 11. As the refrigerant passing through the second capillary tube 18 is in the low pressure state, the refrigerant existing in the first and third evaporators 31 and 33 is introduced to the second refrigerant branch pipe 26 through the refrigerant connection pipe 28. Thus, the first and third evaporators 31 and 33 have little refrigerant, thereby preventing the shortage of the amount of the circulating refrigerant.

If the multi-way valve 23 opens both the first refrigerant branch pipe 25 and the second refrigerant branch pipe 26, the refrigerant passing through the multi-way valve 23 is supplied to the first capillary tube 17 and the second capillary tube 18 to pass through the first and third evaporators 31 and 33, and the second and fourth evaporators 32 and 34. The refrigerant passing through the first and third evaporators 31 and 33 is supplied to the second and fourth evaporators 32 and 34 through the refrigerant connection pipe 28 and the auxiliary capillary tube 29 to be introduced to the compressor 11. At this time, the first refrigerant branch pipe 25 is mounted with the first and third evaporators 31 and 33 functioning as the refrigerating compartment to lower the internal resistance thereof below that of the second and fourth evaporators 32 and 34 and to prevent the shortage of the amount of the refrigerant passing through the first refrigerant branch pipe 25.

Thus, the refrigerator according to the embodiment of the present invention may independently cool the respective storage compartments by providing three or more evaporators corresponding to three or more storage compartments. Also, the refrigerator according to the embodiment of the present invention comprises the plurality of refrigerant branch pipes having the plurality of evaporators connected to at least one of the refrigerant branch pipes in series, and the refrigerant connection pipe connecting the outlet of one of the plurality of refrigerant branch pipes and the inlet of the other one of the plurality of refrigerant branch pipes, thereby preventing a shortage of the circulating refrigerant and improving the cooling efficiency.

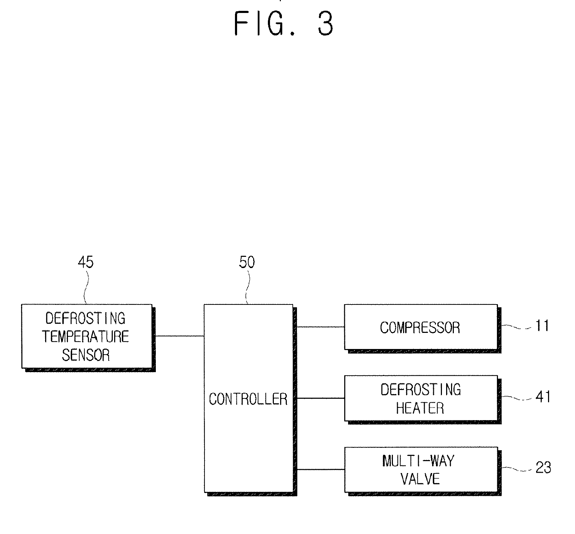

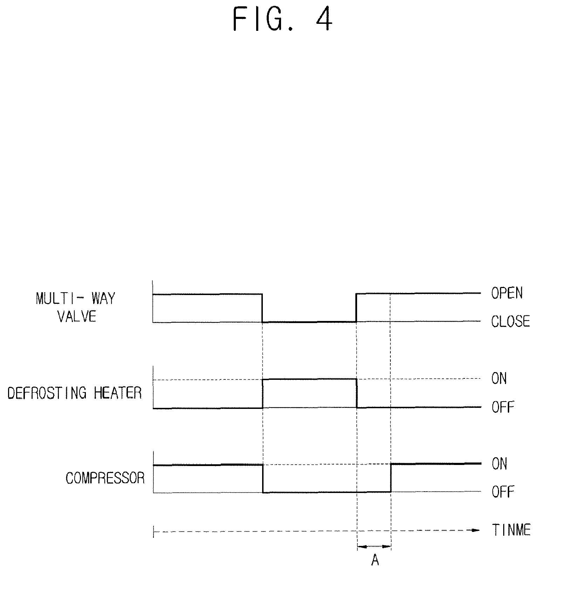

As shown in FIGS. 2, 3 and 4, the cooling unit 10 of the refrigerator according to the embodiment of the present invention may further comprise a plurality of defrosting heaters 41 which are provided to defrost the respective evaporators 31, 32, 33 and 34; and a controller 50 which controls the multi-way valve 23 to close the plurality of refrigerant branch pipes 25 and 26 before the defrosting heaters 41 operate. The cooling unit 10 may further comprise a plurality of defrosting temperature sensors 45 to detect temperatures of the respective evaporators 31, 32, 33 and 34.

As an example, there are provided four defrosting temperature sensors 45 to respectively correspond to the first, second, third and fourth evaporators 31, 32, 33 and 34.

The defrosting heaters 41 are disposed adjacent to the respective evaporators 31, 32, 33 and 34 to remove frost attached therein. Alternatively, the number of the defrosting heaters 41 may vary according to the number of the evaporators 31, 32, 33 and 34. The defrosting heaters 41 do not operate in a cooling mode where the compressor 11 operates. The defrosting heaters operate in a defrosting mode to remove frost attached to the evaporators 31, 32, 33 and 34, at which time the compressor 11 stops operating. The defrosting mode may be preset by the temperature of the evaporators 31, 32, 33 and 34 detected from the defrosting temperature sensors 45 and/or the driving time of the compressor 11.

When the compressor 11 stops operating and the defrosting mode is started, the controller 50 operates the defrosting heaters 41 and closes the multi-way valve 23 to not supply the refrigerant to the first and second refrigerant branch pipes 25 and 26. If the defrosting mode is completed, the controller 50 stops the operation of the defrosting heaters 41 and controls the multi-way valve 23 to open the plurality of refrigerant branch pipes 25 and 26 during predetermined pause time "A" before the compressor 11 operates.

As an example of the present invention, the defrosting mode is completed when the temperature of the evaporators 31, 32, 33 and 34 detected from the defrosting temperature sensors 45 is higher than the preset defrosting temperature. Also, the defrosting mode may be completed after the defrosting heaters 41 operate for predetermined periods of time. The completion of the defrosting mode may be preset in consideration of the temperature of the evaporators 31, 32, 33 and 34 detected from the defrosting temperature sensors 45 and the operating time of the defrosting heaters 41.

The predetermined pause time "A" may be preset as approximately 10 minutes to keep pressure balance within the refrigerant pipes 21, 25, 26 and 28 connected with the compressor 11. Alternatively, the predetermined pause time "A" may be preset as more than, or less than 10 minutes.

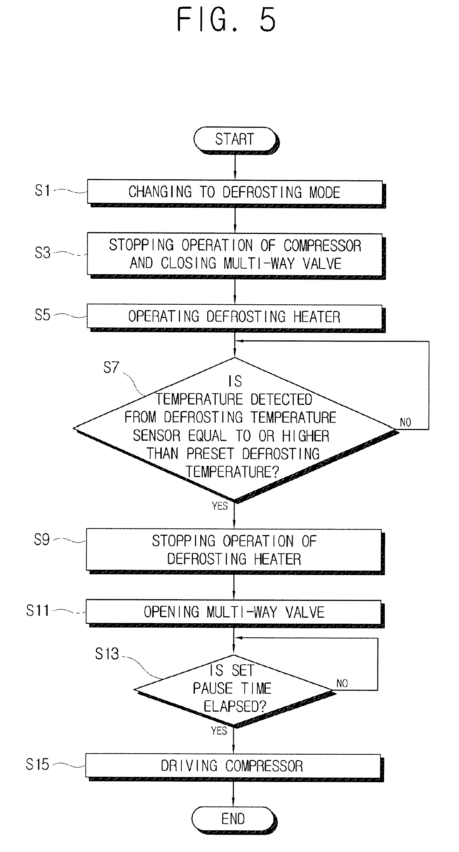

With this configuration, the process of defrosting the refrigerator according to the present invention will be described with reference to FIG. 5.

First, the cooling unit 10 is changed into the defrosting mode (S1). Then, the driving of the compressor 11 is stopped, and the controller 50 controls the multi-way valve 23 to close the first and second refrigerant branch pipes 25 and 26 (S3). At the same time, the defrosting heaters 41 operate in the defrosting mode (S5). The temperature detected from the defrosting temperature sensors 45 and the preset defrosting temperature are periodically compared with each other (S7). If the temperature detected from the defrosting temperature sensors 45 is lower than the preset defrosting temperature, the operation S7 is performed repeatedly. If the temperature detected from the defrosting temperature sensors 45 is equal to or higher than the preset defrosting temperature, the defrosting mode is completed to stop the operation of the defrosting heaters 41 (S9). The controller 50 controls the multi-way valve 23 to open the first and second refrigerant branch pipes 25 and 26 (S11). The preset pause time "A" elapses after the multi-way valve 23 is open (S13). Then, the compressor 11 is driven to change the mode of the cooling unit 10 to the cooling mode (S15).

As the cooling unit of the refrigerator according to the embodiment of the present invention closes the multi-way valve while the defrosting heaters operate, the refrigerant is prevented from being introduced to the plurality of evaporators to shorten the defrosting time and to improve the defrosting efficiency, as well as preventing the heat generated while the defrosting operation is performed from being transmitted to the storage compartments and the refrigerant not to lower the cooling efficiency if it takes a long time to defrost the refrigerator.

Although an embodiment of the present invention has been shown and described, it will be appreciated by those skilled in the art that changes may be made in this embodiment without departing from the principles and spirit of the invention, the scope of which is defined in the appended claims and their equivalents.

## Claims

1. A refrigerator comprising:
a main body comprising three storage compartments; and
a cooling unit having a plurality of evaporators respectively corresponding to the storage compartments,
the cooling unit comprising:
a refrigerant supply pipe to supply a refrigerant to the evaporators,
a plurality of refrigerant branch pipes which are branched from the refrigerant supply pipe to connect the evaporators thereto, and to at least one of the refrigerant branch pipes the plurality of evaporators are connected in series; and
a refrigerant connection pipe to connect an outlet of one of the plurality of refrigerant branch pipes and an inlet of another one of the plurality of refrigerant branch pipes.

2. The refrigerator according to claim 1, wherein the cooling unit comprises a multi-way valve which is provided between the refrigerant supply pipe and the plurality of refrigerant branch pipes to open and close the plurality of refrigerant branch pipes.

3. The refrigerator according to claim 2, wherein the plurality of refrigerant branch pipes comprise a first refrigerant branch pipe and a second refrigerant branch pipe, and
the multi-way valve opens and closes the first refrigerant branch pipe and the second refrigerant branch pipe.

4. The refrigerator according to claim 3, wherein the plurality of evaporators comprises a first evaporator which is mounted to the first refrigerant branch pipe, a second evaporator which is mounted to the second refrigerant branch pipe, and a third evaporator which is connected in series with at least one of the first evaporator and the second evaporator.

5. The refrigerator according to claim 4, further comprising a fourth storage compartment and a fourth evaporator, wherein
the third evaporator is connected in series with the first evaporator , and the fourth evaporator is connected in series with the second evaporator.

6. The refrigerator according to claim 4, wherein the cooling unit further comprises:
a compressor which is connected to an outlet of the second refrigerant branch pipe to compress the refrigerant;
a condenser which is provided between the compressor and the multi-way valve;
a first capillary tube which is provided between the first evaporator and the multi-way valve; and
a second capillary tube which is provided between the second evaporator and the multi-way valve.

7. The refrigerator according to claim 2, wherein the cooling unit further comprises an auxiliary capillary tube which is provided in the refrigerant connection pipe.

8. The refrigerator according to claim 3, wherein the cooling unit further comprises: a plurality of defrosting heaters which respectively defrost the evaporators; and
a controller which controls the multi-way valve to close the plurality of refrigerant branch pipes before the defrosting heaters defrost the evaporators.

9. The refrigerator according to claim 8, wherein the cooling unit further comprises a compressor connected to an outlet of the second refrigerant branch pipe to compress the refrigerant and the controller controls the multi-way valve to open the plurality of refrigerant branch pipes for a predetermined pause time before the compressor compresses the refrigerant in a state in which the defrosting heaters stop operating.

10. A refrigerator comprising:
a main body comprising three storage compartments; and
a cooling unit having a plurality of evaporators respectively corresponding to the storage compartments,
the cooling unit comprising:
a refrigerant supply pipe to supply a refrigerant to the evaporators,
a plurality of refrigerant branch pipes which are branched from the refrigerant supply pipe to connect the evaporators thereto,
a multi-way valve which is provided to open and close the plurality of refrigerant branch pipes in a branch area where the plurality of refrigerant branch pipes are branched from the refrigerant supply pipe;
a plurality of defrosting heaters which are provided to respectively defrost the evaporators; and
a controller which controls the multi-way valve to close the plurality of refrigerant branch pipes before the defrosting heaters operate.

11. The refrigerator according to claim 10, further comprising a compressor to compress the refrigerant, wherein the controller controls the multi-way valve to open the plurality of refrigerant branch pipes for a predetermined pause time before the compressor compresses the refrigerant in a state in which the defrosting heaters stop operating.

12. The refrigerator according to claim 10, wherein the plurality of evaporators are serially mounted to at least one of the plurality of refrigerant branch pipes.

13. The refrigerator according to claim 10, further comprising a refrigerant connection pipe which connects an outlet of one of the plurality of refrigerant branch pipes and an inlet of another one of the plurality of refrigerant branch pipes.

14. A method of controlling a refrigerator having a main body which is formed with three storage compartments, three evaporators respectively corresponding to the storage compartments and a defrosting heater to defrost the evaporators, comprising:
branching a plurality of refrigerant branch pipes from a refrigerant supply pipe which supplies a refrigerant to the evaporators;
connecting one of the evaporators to a respective one of the branched refrigerant pipes;
closing the plurality of branched refrigerant pipes; and
defrosting the storage compartments with the defrosting heater after the closing of the branched refrigerant pipes.

15. The method according to claim 14, further comprising:
stopping the defrosting of the storage compartments;
opening the plurality of branched refrigerant pipes for a predetermined pause time after the stopping of the defrosting ; and
operating a compressor of the refrigerator after the opening of the branched refrigerant pipes.

16. A refrigerator comprising:
first and second storage compartments;
first and second evaporators respectively corresponding to the first and second storage compartments; and
a first pipe to supply a refrigerant from the first evaporator to the second evaporator.

17. The refrigerator according to claim 16, wherein the first and second evaporators are in series.

18. The refrigerator according to claim 16, further comprising a second pipe to supply the refrigerant to inlets of the evaporators, wherein the first pipe supplies the refrigerant from an outlet of the first evaporator to the inlet of the second evaporator.

19. A method of cooling first and second storage compartments of a refrigerator comprising:
providing first and second evaporators respectively corresponding to the first and second storage compartments; and
supplying a refrigerant from the first evaporator to the second evaporator.
